# DEMANDE DE BREVET EUROPEEN

(11) **EP 1 947 734 A1**
(43) Date de publication de la demande: **23.07.2008**
(21) Numéro de dépôt: 08354003.9
(22) Date de dépôt: 17.01.2008
(51) Int. Cl.: H01Q 1/24, H04M 1/02

(54) **Téléphone portable à clapet comprenant une antenne intégrée dans la charnière**

(30) Priorité: 22.01.2007 FR 0700417
(71) Demandeur: Purple Labs, 73370 Le Bourget du Lac (FR)
(72) Inventeur: Allirot, Richard, 38240 Meylan (FR); Fabre, Pascal, 73000 Chambery (FR)
(74) Mandataire: Jouvray, Marie-Andrée

(57) **Abrégé**

Le téléphone portable (1) du type à clapet comporte un boîtier en deux parties (15, 16), articulées autour d'un axe d'articulation (17) par une charnière (18) munie d'un mécanisme à ressort. Le téléphone (1) comporte une antenne (20) comportant un élément rayonnant (21) cylindrique fendu, enroulé autour d'un moyeu (22). La première partie (15) du boîtier comporte un logement (23) semi-cylindrique, constituant une partie de la charnière (18) et dans lequel est disposé l'élément rayonnant (21) de l'antenne (20). Le logement (23) comporte une paroi latérale (24) de guidage du mécanisme à ressort, en matière plastique chargée de fibres de verre, de forme annulaire et perpendiculaire à l'axe d'articulation (17). Le mécanisme à ressort est monté serré dans la paroi latérale (24) et avec jeu dans un orifice longitudinal du moyeu (22) de l'élément rayonnant (21) de l'antenne (20).

## Description

### Domaine technique de l'invention

L'invention concerne un téléphone portable du type à clapet comportant au moins un boîtier en deux parties, articulées autour d'un axe d'articulation par une charnière munie d'un mécanisme à ressort, et une antenne comportant un élément rayonnant cylindrique fendu, enroulé autour d'un moyeu.

### État de la technique

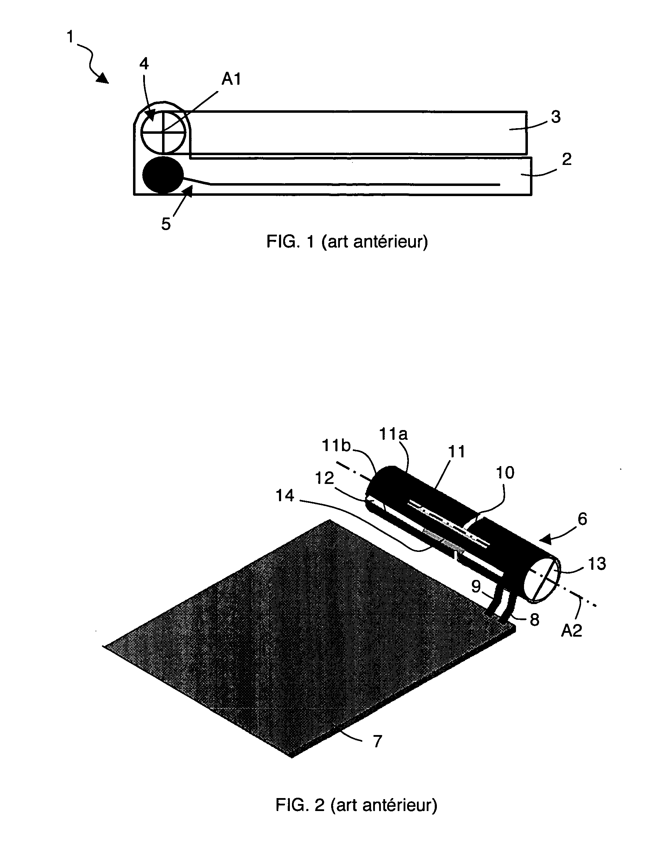

Un téléphone portable 1 du type « à clapet » (communément appelé « clamshell mobile phone » en anglais) comporte classiquement, comme représenté très schématiquement sur la figure 1, un boîtier en deux parties 2, 3, montées à rotation l'une par rapport à l'autre et articulées autour d'un axe d'articulation A1 par une charnière 4. Le téléphone portable 1 comporte également une antenne 5, de préférence avec un élément rayonnant de forme sensiblement cylindrique, facilitant son intégration au niveau de la charnière 4, plus particulièrement sous la charnière 4.

Sur la figure 1, les deux parties 2, 3 du boîtier du téléphone 1 définissent sensiblement deux plans parallèles, une première partie 2 comportant l'antenne 5 et la charnière 4, placée dans un logement situé au-dessus de l'antenne 5, et une deuxième partie 3, placée sur la première partie 2, et articulée par rapport à la première partie 2 autour de la charnière 4.

Comme représentée schématiquement sur la figure 2, l'antenne 5 peut notamment être une antenne comme décrite dans la demande de brevet européen n° 1788660 du 17 novembre 2006. L'antenne 5 comporte essentiellement un élément rayonnant 6 métallique disposé sensiblement dans un plan au-dessus d'une plaquette de circuit imprimé 7 et sensiblement à côté de celle-ci. L'élément rayonnant 6 est connecté par une languette de court-circuit 8 au plan de masse et par une languette d'alimentation 9 à une entrée d'alimentation (non représentée) du circuit imprimé 7. Des fentes 10 peuvent éventuellement être formées dans l'élément rayonnant 6, définissant ainsi plusieurs voies de rayonnement, de manière à passer d'une antenne à bande unique à une antenne bi-bande ou, plus généralement, multi-bande.

L'élément rayonnant 6 est constitué, par exemple, d'une feuille métallique 11 enroulée autour d'un axe A2, parallèle à ses bords longitudinaux 11 a et 11 b, de manière à former un élément rayonnant 6 cylindrique fendu, c'est-à-dire creux et ouvert longitudinalement (figure 2). Les bords longitudinaux 11 a et 11 b de la feuille métallique 11 ne se touchent pas après enroulement, formant ainsi un élément rayonnant 6 cylindrique fendu sur toute sa longueur, c'est-à-dire comportant sur toute sa longueur une rainure longitudinale 12, relativement étroite.

L'élément rayonnant 6 peut être enroulé autour d'un moyeu cylindrique 13, en matériau diélectrique, par exemple en matière plastique ou en céramique. Le moyeu 13 comporte, de préférence, sur au moins une partie de sa longueur, une nervure longitudinale 14, délimitant latéralement la rainure 12 de l'élément rayonnant 6, lors de son enroulement.

Une telle antenne 5 est alors plus facile à stocker, sans risque de déformation et facilement intégrable dans un téléphone 1, comme représenté sur la figure 1. Néanmoins, en vue d'obtenir un téléphone « ultra plat », la demande de brevet européen EP1788660 précitée propose également d'incorporer l'élément rayonnant 6 de l'antenne 5 au niveau de la charnière du téléphone, à savoir au niveau de l'axe A1 d'articulation du boîtier du téléphone (figure 1), afin que les axes A1 et A2 soient confondus.

Cependant, il est très difficile d'intégrer ce type d'antenne 5 dans la charnière du téléphone 1, notamment en raison de la présence d'un mécanisme à ressort dans la charnière, permettant la rotation des deux parties du boîtier l'une par rapport à l'autre, et de différentes autres pièces ne permettant pas une telle intégration dans la charnière. En pratique, les téléphones portables à clapet existants sont donc tous équipés d'une charnière et d'une antenne superposés, ce qui les rend relativement épais.

### Objet de l'invention

L'invention a pour but de remédier à l'ensemble des inconvénients précités et a pour objet la réalisation d'un téléphone portable à clapet présentant un volume global réduit, tout en conservant une qualité mécanique optimale de la charnière pour l'ouverture et la fermeture des deux parties du boîtier du téléphone.

L'objet de l'invention est caractérisé en ce que :
- la première partie du boîtier comporte un logement semi-cylindrique, constituant une partie de ladite charnière et dans lequel est disposé l'élément rayonnant de l'antenne,
- ledit logement comporte une paroi latérale de guidage du mécanisme à ressort, de forme annulaire et perpendiculaire audit axe d'articulation,
- le mécanisme à ressort est monté serré dans ladite paroi latérale de guidage,
- le moyeu de l'élément rayonnant de l'antenne comportant un orifice longitudinal, le mécanisme à ressort est monté avec jeu dans ledit orifice,
- au moins ladite paroi latérale de guidage est en matière plastique chargée de fibres de verre.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 représente une vue de profil très schématique d'un téléphone portable du type à clapet selon l'art antérieur.
La figure 2 représente schématiquement une vue en perspective d'une antenne avec un élément rayonnant cylindrique fendu selon l'art antérieur.
La figure 3 est une vue partielle en perspective d'un mode particulier de réalisation d'un téléphone portable du type à clapet selon l'invention.
La figure 4 est une vue en coupe selon l'axe d'articulation de la charnière du téléphone portable selon la figure 3.
La figure 5 est une vue partielle en perspective éclatée des différents éléments constitutifs du téléphone portable selon les figures 3 et 4.
Les figures 6 et 7 sont deux vues en perspective, selon deux orientations différentes, d'une partie du boîtier du téléphone portable selon les figures 3 à 5.
La figure 8 est une vue en coupe, selon l'axe d'articulation de la charnière, de la partie du boîtier du téléphone portable selon les figures 6 et 7.

### Description de modes particuliers de réalisation

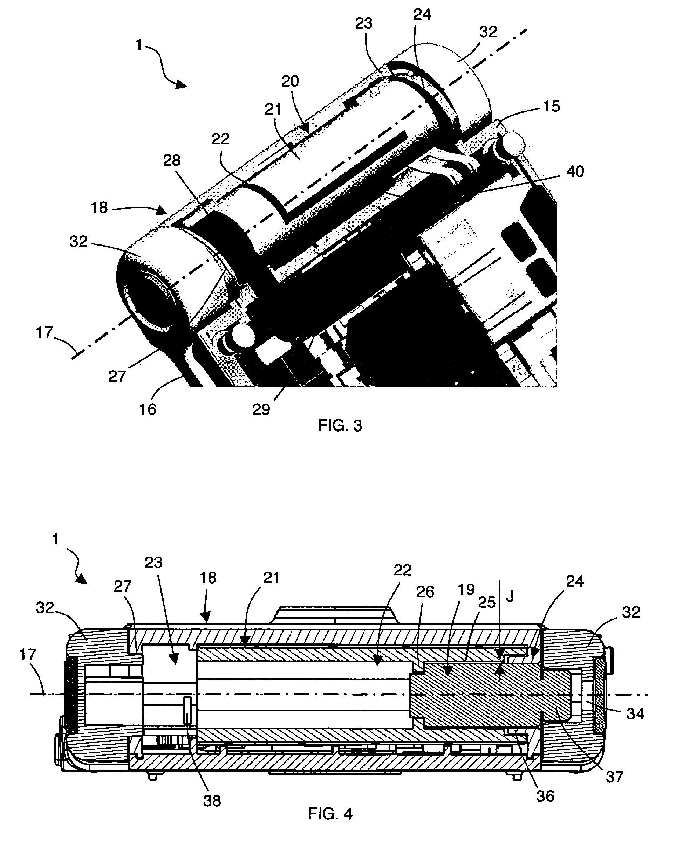

En référence aux figures 3 à 5, le mode particulier de réalisation du téléphone portable 1 selon l'invention est un téléphone du type à clapet comportant un boîtier en deux parties, à savoir une première partie 15, comportant, par exemple, un circuit de traitement et un pavé numérique (non représentés), et une deuxième partie 16, comportant par exemple l'écran du téléphone portable 1. Les deux parties 15, 16 du boîtier de téléphone 1 sont articulées autour d'un axe d'articulation 17 par une charnière 18, munie d'un mécanisme à ressort 19 (figure 4), permettant une rotation à 180° entre les deux parties 15, 16 du boîtier. Le téléphone portable 1 comporte également une antenne 20, de préférence identique à l'antenne 5 représentée sur la figure 2, comportant un élément rayonnant 21 de forme cylindrique, fendu et enroulé autour d'un moyeu 22.

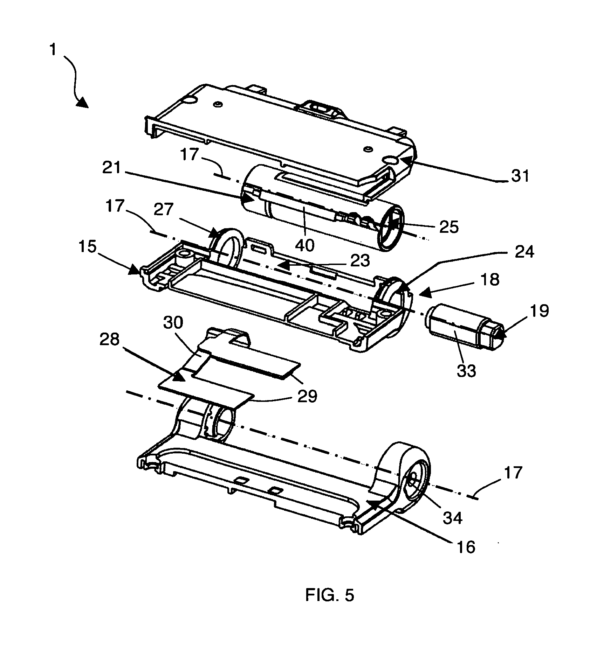

Sur les figures 4 et 5, la première partie 15 du boîtier du téléphone 1 comporte un logement 23 de forme semi-cylindrique (figure 5), constituant une partie de la charnière 18 du téléphone 1. Le logement 23 sert notamment de logement pour l'élément rayonnant 21 de l'antenne 20, de sorte que l'axe d'articulation 17 du téléphone 1 soit confondu avec l'axe longitudinal d'enroulement du cylindre définissant l'élément rayonnant 21 de l'antenne 20.

Le logement 23 comporte alors une première paroi latérale 24 de guidage du mécanisme à ressort 19, monté serré dans ladite paroi latérale 24 (figure 4). Un tel montage serré permet notamment d'éviter tout bruit ou tout parasitage de l'antenne 20, lors de la rotation des deux parties 15, 16 du boîtier du téléphone 1. La paroi latérale 24 de guidage du mécanisme à ressort 19, de forme annulaire (figure 5), est orientée perpendiculairement à l'axe d'articulation 17 de la charnière 18 et définit un bord du logement 23. Le moyeu 22 de l'antenne 20, de préférence creux, comporte un orifice longitudinal 25, dans lequel est monté avec un jeu J le mécanisme à ressort 19, jusqu'à une butée de fin de course 26 réalisée à l'intérieur du moyeu 22.

La paroi latérale 24 de guidage du mécanisme à ressort 19 est réalisée avantageusement en matière plastique chargée de fibres de verre, par exemple du polycarbonate. Une telle matière permet notamment d'optimiser la résistance de la charnière 18, sollicitée par les nombreuses rotations des deux parties 15, 16 du boîtier du téléphone 1, et ce malgré la présence de l'élément rayonnant 21 de l'antenne 20 au niveau de l'axe d'articulation 17 du téléphone portable 1.

La première partie 15 du boîtier du téléphone portable 1 et la deuxième partie 16 du boîtier du téléphone portable 1 sont avantageusement en matière plastique chargée de fibres de verre. D'une façon générale, tout le téléphone portable 1 peut être réalisé avec cette matière, ou avec une tout autre matière permettant une rigidité optimale du téléphone 1.

Par ailleurs, comme représenté sur les figures 3 et 5, le logement 23 de la première partie 15 du boîtier du téléphone portable 1 comporte une seconde paroi latérale 27, disposée en regard de la paroi latérale 24 de guidage du mécanisme à ressort 19, également de forme annulaire et orientée perpendiculairement à l'axe d'articulation 17, et définissant l'autre bord du logement 23 (figure 5).

Le téléphone portable 1 comporte également un câble d'interface flexible 28, destiné classiquement à faire la liaison notamment entre le circuit de traitement du téléphone 1 et l'écran. Sur la figure 5, le câble d'interface flexible 28 comporte deux pattes 29, associées chacune à une des parties 15, 16 du boîtier du téléphone 1 et reliées par une branche coudée 30, passant à travers la seconde paroi latérale 27 du logement 23 (figures 3 et 5).

Par ailleurs, comme représenté sur la figure 5, la première partie 15 du boîtier du téléphone 1 peut comporter un capot de protection 31 (non représenté sur la figure 3 pour des raisons de clarté), destiné à recouvrir toute la première partie 15 du boîtier et notamment le logement 23, dans lequel est placé l'élément rayonnant 21 de l'antenne 20.

Sur les figures 3 à 5, la deuxième partie 16 du boîtier de téléphone 1 comporte deux bagues annulaires 32, de forme complémentaire au logement 23 de la première partie 15 du boîtier du téléphone 1 et coopérant avec les deux parois latérales 24 et 27 du logement 23, afin de constituer la charnière 18 du téléphone portable 1 (figure 3).

Sur la figure 5, le mécanisme à ressort 19 comporte un méplat 33, constituant le point dur de la charnière 18, entraînant les mouvements caractéristiques de fermeture et d'ouverture des deux parties 15, 16 du boîtier du téléphone 1. De plus, le mécanisme à ressort 19 étant inséré avec le jeu J dans le moyeu 22 de l'élément rayonnant 21 de l'antenne 20, il n'engendre aucun effort sur l'antenne 20 et n'entraîne donc aucune déformation des contacts.

Par ailleurs, sur les figures 4 et 5, la bague annulaire 32 de la deuxième partie 16 du boîtier du téléphone 1, à savoir la bague 32 coopérant avec la paroi latérale 24 de guidage du mécanisme à ressort 19, comporte un trou de démontage 34, permettant l'accès au mécanisme à ressort 19. En cas de démontage du téléphone portable 1, il suffit alors d'appuyer sur la tête du mécanisme à ressort 19, à travers le trou de démontage 34, afin notamment de libérer les différentes pièces placées dans la charnière 18.

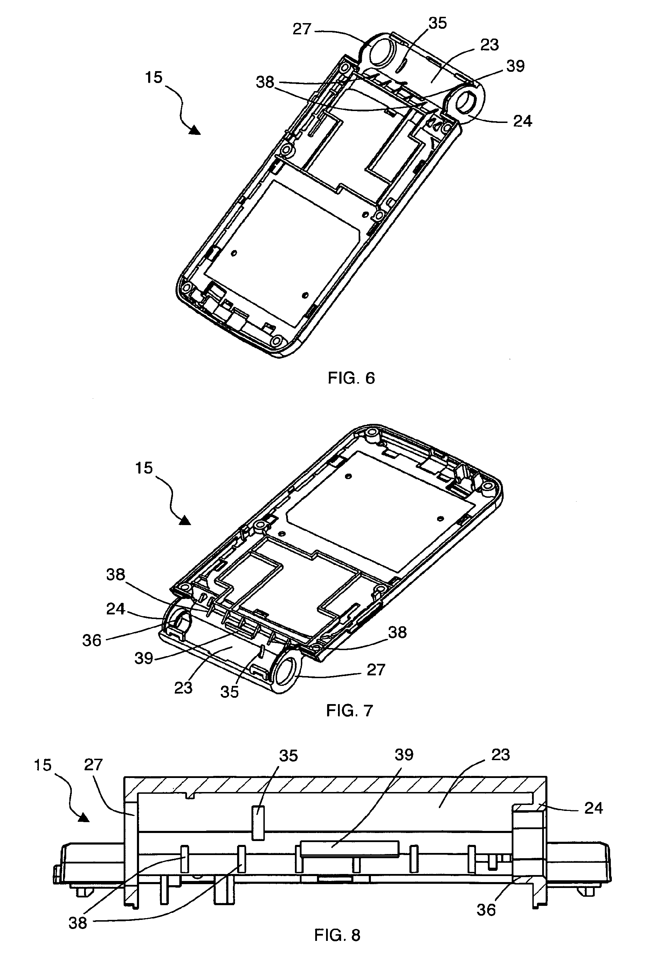

La première partie 15 du boîtier du téléphone portable 1 va être décrite plus en détail au regard des figures 6 à 8. Le logement 23 de la première partie 15 du boîtier comporte, de préférence, au moins une butée de blocage 35, permettant de positionner l'élément rayonnant 21 de l'antenne 20 entre cette butée 35 et la paroi latérale 24 de guidage du mécanisme à ressort 19 (non représenté sur les figures 6 à 8).

La butée de blocage 35 est conformée sensiblement en nervure faisant saillie à l'intérieur du logement 23, perpendiculairement à l'axe d'articulation 17, et placée à une distance prédéterminée de la paroi latérale 24 de guidage du mécanisme à ressort 19, correspondant sensiblement à la longueur de l'élément rayonnant 21 de l'antenne 20.

Sur les figures 7 et 8, la paroi latérale 24 de guidage du mécanisme à ressort 19, de forme annulaire, est prolongée par un bossage 36, également de forme annulaire et faisant saillie en direction du logement 23. Ainsi, comme représenté également sur la figure 4, le mécanisme à ressort 19 est monté serré par rapport à la paroi latérale 24 et sur une longueur suffisamment grande, de sorte qu'il permet un fonctionnement optimal de la rotation des deux parties 15, 16 du boîtier et un fonctionnement optimal du système caractéristique de point dur du mécanisme à ressort 19.

De plus, le mécanisme à ressort 19 est monté dans la paroi latérale 24, de sorte qu'une tête 37 du mécanisme à ressort 19 fait saillie de la paroi latérale 24, dans la direction opposée au logement 23 (figure 4). La tête 37 du mécanisme à ressort 19 coopère alors avec la bague annulaire 32 associée de la deuxième partie 16 du boîtier du téléphone portable 1 (figure 4). La deuxième partie 16 du boîtier se monte alors classiquement par clipsage sur le mécanisme à ressort 19 et sur la seconde paroi latérale 27 du logement 23 de la première partie 15 du boîtier.

Sur la figure 8, la seconde paroi latérale 27 est une simple paroi annulaire, la bague 32 associée de la deuxième partie 16 du boîtier étant montée à rotation à l'intérieur de la seconde paroi latérale 27 (figure 4). Le logement 23 comporte également, de préférence, une pluralité de nervures 38, par exemple réparties régulièrement le long du logement 23, destinées notamment à faciliter et bloquer le positionnement de l'élément rayonnant 21 de l'antenne 20 dans le logement 23 (figure 4).

Par ailleurs, le logement 23 peut comporter également une languette 39 servant notamment de repère de positionnement pour une nervure 40 du moyeu 22 (figure 3), qui vient en contact contre cette languette 39, afin de déterminer le bon positionnement de l'élément rayonnant 21 de l'antenne 20 à l'intérieur du logement 23.

Un tel téléphone portable 1 comme décrit ci-dessus, avec un tel agencement particulier de ses éléments constitutifs à l'intérieur de la charnière 18, à savoir à la fois l'élément rayonnant 21 de l'antenne 20, le mécanisme à ressort 19, pour l'articulation des deux parties 15, 16 du boîtier du téléphone, et un câble d'interface flexible 28, présente ainsi l'avantage d'être extrêmement plat, très rigide et plus léger que les téléphones existants avec des charnières pleines et rigides.

Par ailleurs, les qualités mécaniques de la charnière 18, à savoir une rotation optimale entre les deux parties 15, 16 du boîtier du téléphone, ainsi que les performances optimales de l'antenne (émission, réception, etc.), sont conservées.

L'invention n'est pas limitée aux différents modes de réalisation décrits ci-dessus. La forme, la matière et les dimensions des deux parties 15, 16 du boîtier du téléphone 1 peuvent être différentes, tant qu'elles permettent notamment l'intégration de l'élément rayonnant 21 de l'antenne 20 dans la charnière 18.

L'invention s'applique à tout type de téléphone portable à clapet, quelle que soit sa taille, tant qu'il permet l'articulation de ses deux parties du boîtier autour d'un seul et même axe d'articulation, tant que l'antenne est placée au niveau de la charnière du téléphone et tant que celui-ci est fabriqué en une matière offrant une rigidité optimale.

## Revendications

1. Téléphone portable (1) du type à clapet comportant au moins un boîtier en deux parties (15, 16), articulées autour d'un axe d'articulation (17) par une charnière (18) munie d'un mécanisme à ressort (19), et une antenne (20) comportant un élément rayonnant (21) cylindrique fendu, enroulé autour d'un moyeu (22), téléphone **caractérisé en ce que** :
- la première partie (15) du boîtier comporte un logement (23) semi-cylindrique, constituant une partie de ladite charnière (18) et dans lequel est disposé l'élément rayonnant (21) de l'antenne (20),
- ledit logement (23) comporte une paroi latérale (24) de guidage du mécanisme à ressort (19), de forme annulaire et perpendiculaire audit axe d'articulation (17),
- le mécanisme à ressort (19) est monté serré dans ladite paroi latérale (24) de guidage,
- le moyeu (22) de l'élément rayonnant (21) de l'antenne (20) comportant un orifice longitudinal (25), le mécanisme à ressort (19) est monté avec jeu dans ledit orifice (25),
- au moins ladite paroi latérale (24) de guidage est en matière plastique chargée de fibres de verre.

2. Téléphone selon la revendication 1, **caractérisé en ce que** ledit logement (23) comporte au moins une butée de blocage (35), pour le positionnement de l'élément rayonnant (21) de l'antenne (20) entre ladite butée (35) et ladite paroi latérale (24) de guidage du mécanisme à ressort (19).

3. Téléphone selon l'une des revendications 1 et 2, **caractérisé en ce que** le moyeu (22) de l'élément rayonnant (21) de l'antenne (20) comporte une butée de fin de course (26) du mécanisme à ressort (19).

4. Téléphone selon l'une quelconque des revendications 1 à 3, **caractérisé en ce qu'**au moins ladite première partie (15) du boîtier est en matière plastique chargée de fibres de verre.

5. Téléphone selon l'une quelconque des revendications 1 à 4, **caractérisé en ce que**, la deuxième partie (16) du boîtier comportant deux bagues annulaires (32) coopérant avec le logement (23) de la première partie (15) du boîtier pour constituer ladite charnière (18), la deuxième partie (16) du boîtier est en matière plastique chargée de fibres de verre.

6. Téléphone selon l'une quelconque des revendications 1 à 5, **caractérisé en ce que** ladite matière plastique est du polycarbonate.
